Europäisches Patentamt

European Patent Office

Office européen des brevets

(19)

(11) **EP 1 153 485 B1**

(12) **EUROPEAN PATENT SPECIFICATION**

(45) Date of publication and mention
of the grant of the patent:
**20.08.2003 Bulletin 2003/34**

(21) Application number: **00903867.0**

(22) Date of filing: **17.02.2000**

(51) Int Cl.$^7$: **H04B 1/707**

(86) International application number:
**PCT/GB00/00556**

(87) International publication number:
**WO 00/049724 (24.08.2000 Gazette 2000/34)**

(54) **ADAPTIVE HYBRID INTERFERENCE CANCELLATION FOR MULTI RATE USERS**

ADAPTIVE HYBRIDINTERFERENZUNTERDRÜCKUNG FÜR MULTI-RATEN-BENUTZER

ANNULATION D'INTERFERENCE HYBRIDE ADAPTATIVE POUR DES UTILISATEURS
COMMUNIQUANT SELON DES DEBITS DIFFERENTS

(84) Designated Contracting States:
**AT BE CH CY DE DK ES FI FR GB GR IE IT LI LU
MC NL PT SE**

(30) Priority: **17.02.1999 GB 9903465**

(43) Date of publication of application:
**14.11.2001 Bulletin 2001/46**

(73) Proprietor: **KING'S COLLEGE LONDON
London WC2R 2LS (GB)**

(72) Inventors:
• **AGHVAMI, Abdol, Hamid
London W5 2NQ (GB)**
• **KOULAKIOTIS, Dimitris
London WC2R 2LS (GB)**

(74) Representative: **Lucas, Brian Ronald
Lucas & Co.
135 Westhall Road
Warlingham, Surrey CR6 9HJ (GB)**

(56) References cited:
• **OJANPERA T ET AL: "Qualitative comparison of
some multiuser detector algorithms for
wideband CDMA" IEEE VEHICULAR
TECHNOLOGY CONFERENCE,XX,XX, vol. 1,
1998, pages 46-50-50vol1, XP002126104**
• **WIJTING C S ET AL: "Groupwise serial multiuser
detectors for multirate DS-CDMA" 1999 IEEE
49TH VEHICULAR TECHNOLOGY
CONFERENCE (CAT. NO.99CH36363), 1999 IEEE
49TH VEHICULAR TECHNOLOGY
CONFERENCE. MOVING INTO A NEW
MILLENIUM, HOUSTON, TX, USA, 16-20 MAY
1999, pages 836-840 vol.1, XP002141307 1999,
Piscataway, NJ, USA, IEEE, USA ISBN:
0-7803-5565-2**
• **KOULAKIOTIS D ET AL: "EVALUATION OF A
DS/CDMA MULTIUSER RECEIVER EMPLOYING
A HYBRID FORM OF INTERFERENCE
CANCELLATION IN RAYLEIGH-FADING
CHANNELS" IEEE COMMUNICATIONS
LETTERS,US,IEEE SERVICE CENTER,
PISCATAWAY,US, vol. 2, no. 3, 1 March 1998
(1998-03-01), pages 61-63, XP000751853 ISSN:
1089-7798 cited in the application**

EP 1 153 485 B1

**Description**

The present invention relates to a method for reducing interference in Wireless Telecommunications Systems and in particular it relates to a method for reducing interference which can be applied to a multi-rate (multi-service) wideband code division multiple access (W-CDMA) which is used in personal mobile communications.

Interference cancellation is used to reduce the interference between two or more signals.

W-CDMA will be able to support more than one service in a single carrier e.g. a 5 MHz carrier and this can cause interference among users of the same service and between users of one service and users of the other services.

Interference can occur when there are users with a high bit rate and a low bit rate using the same bandwidth. In these circumstances there will be interference amongst users of the same service (for both high and low bit rate users) and also considerable interference by the high bit rate users on the low bit rate users. This can occur when there are video signals which have a high bit rate and voice signals which have a lower bit rate using the same bandwidth.

Normally the spreading sequences (codes) are designed in such a way that

$$\int_{0}^{T_b} |c_k(t)|^2 dt = 1,$$

(where $c_k(t)$ represents the user's code). This is reflected in the different power spectrum density (PSD) of different services. Using a fixed bandwidth, the lower the processing gain (PG), i.e. higher bit rate, the more powerful (higher PSD) interferer a user is to other, lower bit rate users (higher PG) so that users of lower bit rate services will experience severe interference from users of higher bit rate services.

It is known to use a successive interference cancellation (SIC) scheme to reduce interference between users as described in "Analysis of a Successive Interference Scheme in a DS/CDMA System" IEEE Journal on Selected Areas in Communications, Vol 12, No. 5 pp 796-807 June 1994 by P. Patel, J Holtzman, however this technique can involve a long delay for the detection/ cancellation of all user and, assuming a one bit delay is required for one loop, then the total delay for the detection/ cancellation of K users is K bits. The scheme is such that the first users detected experience either no, or a small reduction in MUI as, for example, the first user detected experiences no interference reduction and the second user only that due to the cancellation of the first user etc. so only the last user will experience complete MAI cancellation.

However, due to the unequal amount of interference seen by each user, users cancelled initially have different signal to noise ratio (S/N ratio) and thus bit error rate (BER), than users cancelled later in the interference cancellation process. This involves the need for some sort of power control that will ensure that all users have the same S/N ratio and thus BER.

Another interference cancellation scheme is parallel interference cancellation (PIC), however this involves high complexity as each user regenerates/cancels a replica of its signal K-1 times so that the total number of regenerations/cancellations is K(K-1) and the regeneration process of all interferences includes users that are weak and thus unreliable. In order to avoid this conventional PIC requires either fast power control (in order to compensate for the near/far effect) and/or multistage.

This is described in "Improved Parallel Interference Cancellation for CDMA" by D. Divsalar et al, IEE Trans. On Comms. Vol. 46 No2 pp 258-268 February 1998.

Another interference cancellation scheme using parallel interference cancellation (PIC), is described in a paper by Tero Ojanpera, Ramjee Prasad, and Hiroshi Harada "Qualitative Comparison of Some Multiuser Detector Algorithms for Widwband CDMA" IEEE Vehicular Technology Conference Vol. 1 pages 46-50, which discloses the use of wideband weighted parallel interference cancellation (MW-PIC) which has the disadvantages of PIC above.

We have now devised an interference scheme which reduces these problems.

According to the invention there is provided a method for reducing interference between users of a carrier signal in which there are users with a high bit rate and users with a lower bit rate characterised in that the higher bit rate users have their interference reduced by hybrid interference cancellation (HIC) and then the interference between the other lower bit rate users reduced by HIC and in that a different HIC configuration is used for the higher bit rate users and the lower bit rate users.

The HIC configuration for the high bit rate users is different from the HIC configuration of the low bit rate users and the method of the invention takes advantage of this flexibility; this is not possible with PIC and SIC.

The principal idea behind HIC is that instead of cancelling all K users either in series or parallel there is cancellation partially in series and partially in parallel. HIC is described in D. Koulakiotis, A.H. Aghvami, "Evaluation of a DS/CDMA Multiuser Receiver Employing a Hybrid form of Interference Cancellation in Rayleigh Fading Channels", IEEE, Communication Letters, Vol. 2, No 3, pp.61-63, March 98.

D. Koulakiotis, A.H. Aghvami, "Effect of Imperfect Amplitude Estimation on the Performance of Hybrid Interference Cancellation", ICC'98, Atlanta, USA, pp.1571-1575, June 1998.

D. Koulakiotis, A.H. Aghvami, "Hybrid Interference Cancellation, a Multiuser Detection Scheme for W-DS/CDMA Systems", ICT'98, Porto Carras, Greece, Vol II, pp.52-56, June 1998.

Taking the higher bit rate users and the lower bit rate users separately this can be expressed as K-P-S where K is the total number of users in the category and the number cancelled at the PIC and SIC stage is expressed by P and S respectively.

The signals selected for partial PIC are preferably the "most reliable users" (users whose interferences can be regenerated most correctly) and this ensures that most of the interference will be cancelled between the P users and the partial P cancellation is substantially accurate.

Thus, for a 10-5-2 configuration the number of users per loop at the buffer with the $R_x$ signal will be 10,8,6,4,2, while at the partial PIC stage there will be 5,5,5,4,2 users respectively, at the end of which 2 users will be cancelled per loop.

According to the UMTS Specifications (concept Group Alpha-Wideband Direct - Sequence CDMA, Part 1: System Description, Performance Evaluation, ETSI SMG2#23, Bad Salzdetfurth, Germany, October 1997) the number of higher bit rate users will be small.

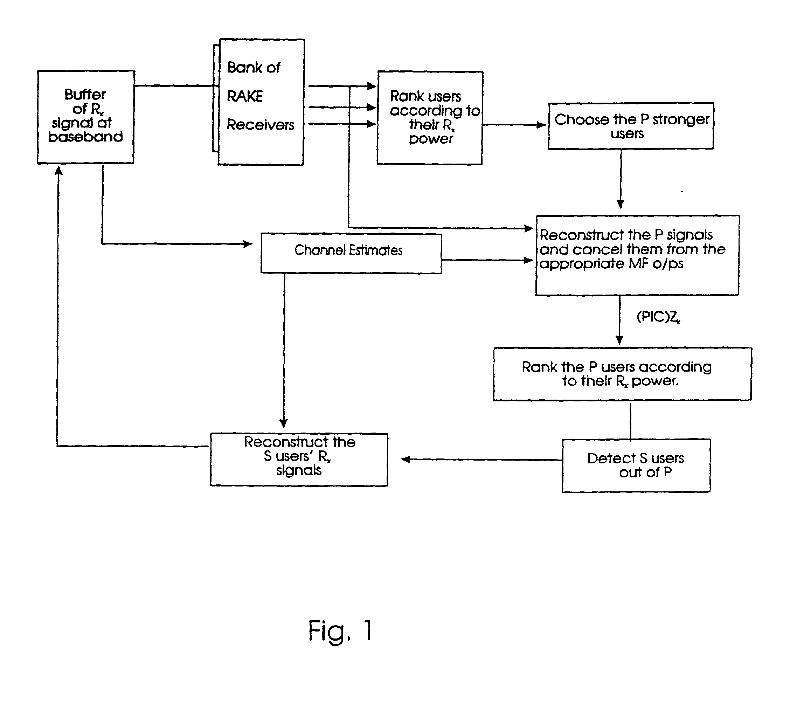

A block diagram of an HIC system is shown in fig. 1 and such a system is applied to the higher bit rate users and then applied to the lower bit rate users.

The advantages of this hybrid interference cancellation (HIC) system over PIC and SIC is that the system will have better performance because interference cancellation takes place at two places (1. partial PIC and 2. cancellation at the end of the loop from the received compound signal). The selection, at 1, of the "most reliable users" ensures that most of the interference will be cancelled among the P users, the cancellation of more than one user at the time ensures that the total delay is not high, unlike SIC and, in addition, at high bit rates the limitation due to delay is partially alleviated. The repetitive partial PIC requires fewer computations than the equivalent one stage PIC and the K-P-S configuration is flexible so that it enables there to be a trade off between complexity and BER performance.

By carrying out HIC on the higher bit rate users followed by carrying out HIC on the lower bit rate users interference between the higher bit rate users and lower bit rate users and amongst the different bit rate users is reduced.

The position where the interference cancellation takes place is optional, the regenerated signals can be cancelled from the received signals at the baseband or the cross correlations between the cancelled and the remaining users can be cancelled from matched filter outputs. Fewer operations are required in the latter case, reducing complexity as the former requires re-processing through matched filters. However cancelling the interference at the baseband improves the detection of users autocorrelation peaks thus improving delay estimation.

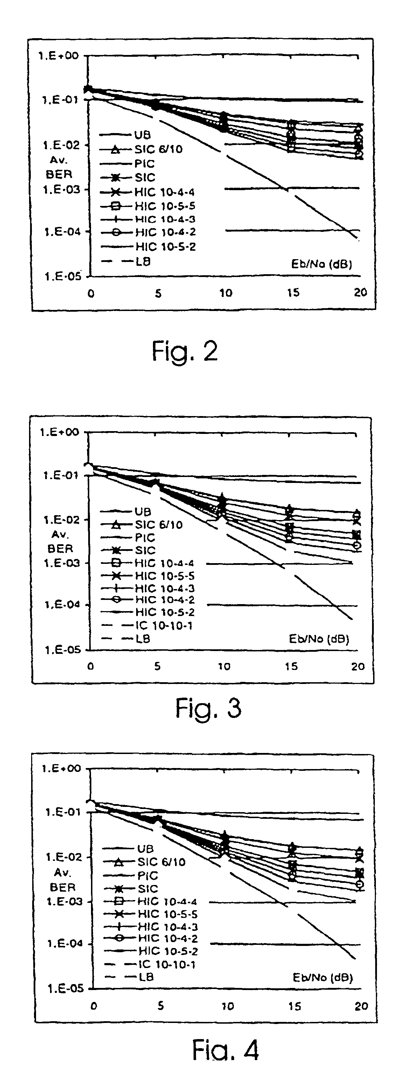

The use of HIC is exemplified with reference to the comparison with various configurations and PIC and SIC and the results shown in figs 2 to 5.

In the figures, the BER performance of five configurations of HIC (10-5-5, 10-5-2, 10-4-4, 10-4-3 and 10-4-2) is assessed, along with PIC and SIC and a version of SIC with only six out of ten cancellations, in order to compare all the schemes based on similar delay requirements. All the results are related to the upper bound (UB) i.e. the matched filter receiver and also the lower bound (LB) i.e. the single user case.

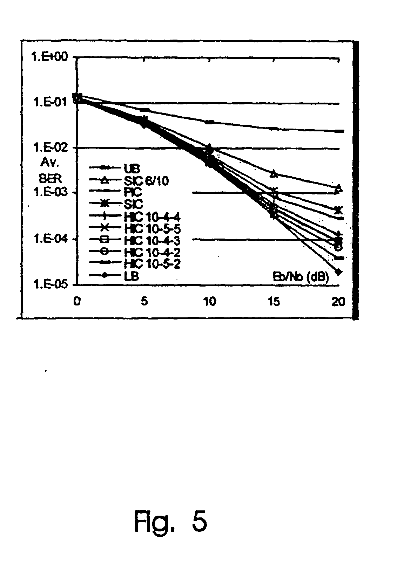

Figs. 2, 3 and 4 depict the simulation results for processing gains (PG) of 19, 25 and 47 respectively, in fig. 5 there are 10 users and PG of 49. It is clear that HIC performs much better than either SIC and PIC and for HIC 10-5-2 is the best. In general the more users at the P stage and the fewer at the S stage the better the result so 10-10-1 (K-K-1) should give the best performance however such as system is not feasible in a single service W-CDMA environment due to its increased complexity. In fig. 4 it can be seen that although PIC and SIC are above the lower bound the HIC configurations, especially the 10-4-2 is very close to it and, in particular for low Eb/No the two performances almost match.

In the case of complexity in SIC, each user is regenerated/cancelled once whilst, for PIC, each user has to regenerate its signal and cancel it from the remaining K-1 users. The process of regeneration and cancellation of a user is more complex than the one of ranking.

It can be shown that for K equal to 10 users the results in table 1 are obtained.

Table 1

| SIC | 10-4-4 | 10-4-3 | 10-5-5 | 10-4-2 | 10-5-2 | PIC |
|-----|--------|--------|--------|--------|--------|-----|
| 9   | 34     | 45     | 45     | 58     | 82     | 90  |

As can be seen, SIC requires the smallest number and PIC the largest number, among HIC 10-5-2 offers the best BER at the expense of increased complexity, however 10-4-3 and 10-4-4 require half or less but give very good BER performance.

A second measure of complexity is the number of user rankings which have to be done. For PIC user rankings are not required and the results for 10 users are shown in Table 2.

Table 2

| PIC | 10-4-4 | 10-4-3 | 10-5-5 | 10-4-2 | 10-5-2 | SIC |
| --- | --- | --- | --- | --- | --- | --- |
| - | 25 | 28 | 35 | 48 | 51 | 54 |

As can be seen SIC requires the largest number and HIC 10-4-4 and 10-4-3 require numbers which are nearly half the maximum required by SIC. Overall PIC is the most complex scheme and HIC 10-4-4 and 10-4-3 provide two affordable complex solutions.

In practice W-CDMA will be expected to use cascade IC schemes so two or more stages will be used and the computations will be increased by the number of stages.

Where there are users in a bandwidth which can be divided between two services a high bit rate (with H users) and a low bit rate (with L users) the number of users K = H + L.

The cancellation of interference amongst the high bit rate users is carried out using HIC and then cancellation of the interference amongst the low bit rate users is carried out using HIC.

The cancellation of the signals (interference) of the high bit rate users should be as complete as possible, otherwise there is the risk that the residual high bit rate interference will degrade the performance of the interference cancellation process during cancellation among the low bit rate users. As there will be a low number of high bit rate users, cancellation of the signals of the high bit rate users can be carried out using a complex HIC configuration e.g. H-H-1, or a less complex configuration but still having high performance capabilities. During this stage of detection/cancellation of high bit rate users, interference from the low bit rate users can be considered as noise.

The HIC configuration chosen to reduce the interference among the low bit rate users can be selected as specified above.

In the case where the total number of users K = H + L, where H is the number of high bit rate users and L is the number of low bit rate users, then the method can be applied by firstly using an HIC with the best BER among HIC configurations as referred to above e.g. H-H-1, to cancel the signals (interference) of the high bit rate users and then applying HIC e.g. L-P-S to cancel the interference among the low bit rate users.

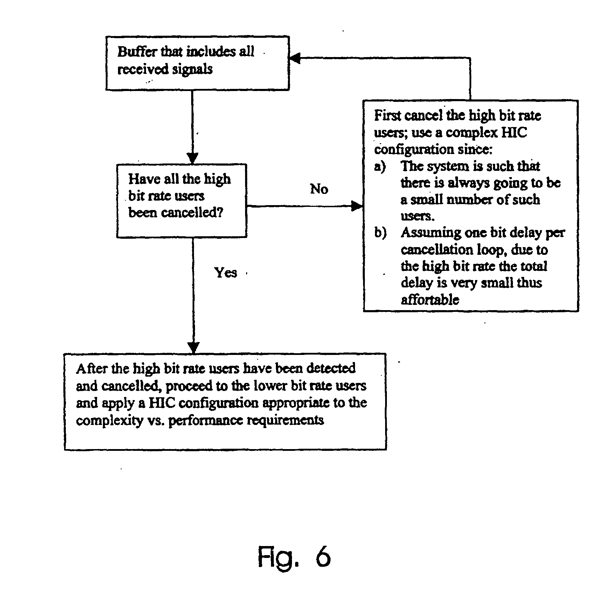

This is illustrated in the block diagram shown as fig. 6.

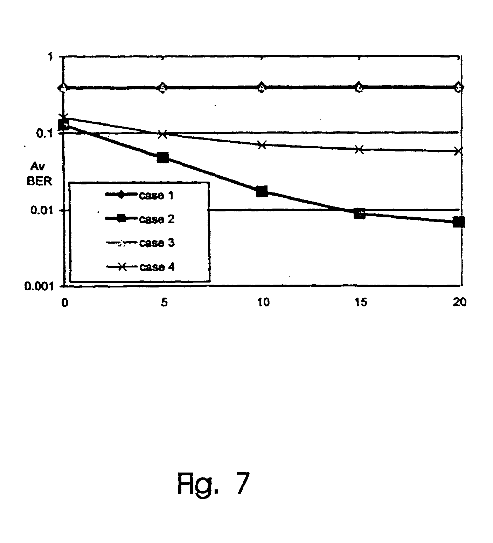

The invention is exemplified in fig. 7 in which there are 9 low bit rate users and 1 high bit rate user. Simulations are performed for both cases of 4-arm and 6-arm RAKE receiver

(1) in the case when all users (high + low bit rate) use a conventional matched filter detector.
(2) in the case where a matched filter detector is used for the low bit rate users but interference cancellation is applied on the high bit rate user.
Results are repeated for the case of 4-arm RAKE receiver
(3) in the case when all users use the conventional matched filter detector
(4) in the case where a matched filter detector is used for the low bit rate users but interference cancellation is applied on the higher bit rate user.

This illustrates the advantage of cancelling the high bit rate users that cause severe interference to the low bit rate users. Even when there is only one high bit rate user there is a substantial improvement in the average BER when this is cancelled. Interference cancellation is not applied amongst the low bit rate users in this example.

**Claims**

1. A method for reducing interference between users of a carrier signal in which there are users with a high bit rate and users with a lower bit rate **characterised in that** the higher bit rate users have their interference reduced by hybrid interference cancellation (HIC) and then the interference between the other lower bit rate users is reduced by HIC and **in that** a different HIC configuration is used for the higher bit rate users and the lower bit rate users.

2. A method as claimed in claim 1 **characterised in that** the signals selected for partial PIC (Parallel Interference Cancellation) are the signals corresponding to the users whose interferences can be regenerated most correctly.

**3.** A method as claimed in claim 1 or 2 **characterised in that** the signals regenerated during interference cancellation are cancelled from signals received at the baseband.

**4.** A method as claimed in claim 1 or 2 **characterised in that** cross correlations between the signals which have been cancelled and the remaining users are cancelled from matched filter outputs.

**5.** A method as claimed in any one of the preceding claims **characterised in that** the cancellation of the signals of the high bit rate users is carried out using a complex HIC configuration so that the cancellation is substantially complete.

**6.** A method as claimed in any one of the preceding claims **characterised in** tthat thetotal number users is K = H + L, where H is the number of high bit rate users and L is the number of low bit rate users and (i) using an HIC with the best BER (Bit Error Rate) among HIC configurations to cancel the signals of the high bit rate users and then (ii) applying HIC to cancel the interference among the low bit rate users.

**7.** A method as claimed in claim 6 **characterised in that characterised in that** the signals of the high bit rate users are cancelled using a H-H-1 configuration and then applying L-P-S, where L is the total remaining number of users, P are the users out of L that are processed in parallel, and S are the users cancelled using successive interference cancellation (sic), to cancel the signals among the low bit rate users.


**Patentansprüche**

**1.** Verfahren zum Verringern der gegenseitigen Störung zwischen Benutzern eines Trägersignals, bei dem Benutzer mit einer hohen Bitrate und Benutzer mit einer niedrigeren Bitrate vorhanden sind, **dadurch gekennzeichnet, daß** bei den Benutzern mit höherer Bitrate ihre gegenseitige Störung durch eine hybridartige Beseitigung der gegenseitigen Störung (= *Hybrid Interference Cancellation* = HIC) verringert wird und dann die gegenseitige Störung zwischen den Benutzern mit niedrigerer Bitrate durch die HIC verringert wird und daß für die Benutzer mit höherer Bitrate und für die Benutzer mit niedrigerer Bitrate eine unterschiedliche HIC-Konfiguration verwendet wird.

**2.** Verfahren nach Anspruch 1, **dadurch gekennzeichnet, daß** die für eine partielle PIC (= *Parallel Interference Cancellation* = parallele Beseitigung der gegenseitigen Störung) ausgewählten Signale jene Signale sind, die den Benutzern entsprechen, deren gegenseitige Störungen am zutreffendsten wiederhergestellt werden können.

**3.** Verfahren nach Anspruch 1 oder 2, **dadurch gekennzeichnet, daß** die während der Beseitigung der gegenseitigen Störung wiederhergestellten Signale aus den im Grundband empfangenen Signalen entfernt werden.

**4.** Verfahren nach Anspruch 1 oder 2, **dadurch gekennzeichnet, daß** die Kreuzkorrelationen zwischen den Signalen, die entfernt worden sind, und den verbleibenden Benutzern aus Ausgangssignalen angepaßter Filter beseitigt werden.

**5.** Verfahren nach einem der vorhergehenden Ansprüche, **dadurch gekennzeichnet, daß** die Beseitigung der Signale der Benutzern mit hoher Bitrate unter Verwendung einer komplexen HIC-Konfiguration ausgeführt wird, so daß die Beseitigung im wesentlichen vollständig ist.

**6.** Verfahren nach einem der vorhergehenden Ansprüche, **dadurch gekennzeichnet, daß** die Gesamtzahl der Benutzer gleich K = H + L ist, wobei H die Anzahl der Benutzer mit hoher Bitrate ist und L die Anzahl der Benutzer mit niedriger Bitrate ist, und (i) eine HIC-Konfiguration mit der besten BER (= *Bit Error Rate* = Bitfehlerrate) unter den HIC-Konfigurationen verwendet wird, um die Signale der Benutzer mit hoher Bitrate zu beseitigen, und dann (ii) die HIC angewendet wird, um die gegenseitige Störung zwischen den Benutzern mit niedriger Bitrate zu beseitigen.

**7.** Verfahren nach Anspruch 6, **dadurch gekennzeichnet, daß** die Signale der Benutzer mit hoher Bitrate unter Verwendung einer H-H-1-Konfiguration beseitigt werden und daß dann L-P-S angewendet wird, wobei L die verbleibende Gesamtanzahl der Benutzer ist, P die Benutzer aus L sind, die parallel verarbeitet werden, und S die Benutzer sind, die unter Verwendung einer sukzessiven Beseitigung der gegenseitigen Störung (= SIC = *successive interference cancellation*) entfernt worden sind, um die Signale unter den Benutzern mit niedriger Bitrate zu beseitigen.

**Revendications**

1. Procédé pour réduire l'interférence entre les utilisateurs d'un signal porteur dans lequel il existe des utilisateurs avec un débit binaire élevé et des utilisateurs avec un débit binaire inférieur, **caractérisé en ce que** les utilisateurs à débit binaire supérieur ont leur interférence réduite par annulation d'interférence hybride (HIC), puis l'interférence entre les autres utilisateurs à débit binaire inférieurs est réduite par HIC et **en ce que** l'on utilise une configuration HIC différente pour les utilisateurs à débit binaire supérieur et les utilisateurs à débit binaire inférieur.

2. Procédé selon la revendication 1, **caractérisé en ce que** les signaux choisis pour PIC partiel (annulation d'interférence parallèle) sont les signaux correspondant aux utilisateurs dont les interférences peuvent être régénérées de façon la plus correcte.

3. Procédé selon la revendication 1 ou 2, **caractérisé en ce que** les signaux régénérés pendant l'annulation d'interférence sont annulés à partir des signaux reçus au niveau de la bande de base.

4. Procédé selon la revendication 1 ou 2, **caractérisé en ce que** des corrélations croisées entre les signaux qui ont été annulés et les utilisateurs restants sont annulés à partir des sorties de filtre adapté.

5. Procédé selon l'une quelconque des revendications précédentes, **caractérisé en ce que** l'annulation des signaux des utilisateurs à débit binaire élevé est réalisée en utilisant une configuration HIC complexe de sorte que l'annulation est essentiellement complète.

6. Procédé selon l'une quelconque des revendications précédentes, **caractérisé en ce que** le nombre total d'utilisateurs est K = H+L, où H est le nombre d'utilisateurs à débit binaire élevé et L est le nombre d'utilisateurs à débit binaire bas et (i) en utilisant un HIC avec le meilleur BER (taux d'erreurs sur des binaires) parmi les configurations HIC pour annuler les signaux des utilisateurs à débit binaire élevé, puis (ii) en appliquant HIC pour annuler l'interférence parmi les utilisateurs à débit binaire bas.

7. Procédé selon la revendication 6, **caractérisé en ce que** les signaux des utilisateurs à débit binaire élevé sont annulés en utilisant une configuration H-H-1, puis en appliquant L-P-S, où L est le nombre restant total d'utilisateurs, P représente les utilisateurs en dehors de L qui sont traités en parallèle, et S représente les utilisateurs annulés en utilisant une annulation d'interférence successive (SiC) pour annuler les signaux parmi les utilisateurs à débit binaire bas.

Buffer of $R_x$ signal at baseband

Bank of RAKE Receivers

Rank users according to their $R_x$ power

Choose the P stronger users

Channel Estimates

Reconstruct the P signals and cancel them from the appropriate MF o/ps

(PIC)$Z_k$

Rank the P users according to their $R_x$ power.

Reconstruct the S users' $R_x$ signals

Detect S users out of P

Fig. 1

Fig. 2

Fig. 3

Fig. 4

Fig. 5

Buffer that includes all
received signals

Have all the high
bit rate users
been cancelled?

No

First cancel the high bit rate
users; use a complex HIC
configuration since:
a)  The system is such that
    there is always going to be
    a small number of such
    users.
b)  Assuming one bit delay per
    cancellation loop, due to
    the high bit rate the total
    delay is very small thus
    affordable

Yes

After the high bit rate users have been detected
and cancelled, proceed to the lower bit rate users
and apply a HIC configuration appropriate to the
complexity vs. performance requirements

Fig. 6

Fig. 7